# FASCICULE DE BREVET EUROPEEN

(11) **EP 0 358 570 B1**
(45) Date de publication et mention de la délivrance du brevet: **31.03.1993**
(21) Numéro de dépôt: 89402424.9
(22) Date de dépôt: 06.09.1989
(51) Int. Cl.: G05G 1/10, B60R 16/00

(54) **Manette de commande, en particulier pour véhicule automobile**
Schalthebelgriff, insbesondere für Kraftfahrzeuge
Actuating lever handle, particularly for a motor vehicle

(30) Priorité: 08.09.1988 FR 8811745
(43) Date de publication de la demande: 14.03.1990
(73) Titulaire: JAEGER, F-92303 Levallois-Perret (FR)
(72) Inventeur: Lagier, Daniel, F-92000 Nanterre (FR)
(74) Mandataire: Martin, Jean-Jacques

(56) Documents cités:
- EP-A- 0 160 905
- DE-A- 2 531 696
- US-A- 3 064 494
- US-A- 3 499 125

## Description

La présente invention concerne une manette de commande, en particulier pour véhicule automobile.

Le document US-A-3 499 125 décrit une manette de commande, en particulier pour véhicule automobile, comprenant:
- un corps fixe,
- une première bague de commande, montée à rotation sur le corps et munie d'une première plaquette de circuit, généralement perpendiculaire à son axe de rotation, et
- au moins deux conducteurs électriques, généralement parallèles à l'axe de rotation de la bague, et immobilisés à rotation par rapport au corps, qui reposent par contact frottant sur la première plaquette de circuit par une de leurs extrémités,
- la première plaquette comportant, sur sa face en regard des conducteurs, au moins une piste adaptée de telle sorte que l'impédance entre les conducteurs varie lors de la rotation de la bague.

La présente invention a pour but de proposer une manette de commande équipée de deux bagues de commande susceptibles de rotation, indépendamment l'une de l'autre, sur un corps commun, pour la mise en oeuvre de deux effets de commutation indépendants.

A cette fin, la présente invention propose une manette de commande du type connu comprenant
- un corps fixe,
- une première bague de commande, montée à rotation sur le corps et munie d'une première plaquette de circuit, généralement perpendiculaire à son axe de rotation,
- au moins deux conducteurs électriques, généralement parallèles à l'axe de rotation de la bague, et immobilisés à rotation par rapport au corps, qui reposent par contact frottant sur la première plaquette de circuit par une de leurs extrémités,
- la première plaquette comportant, sur sa face en regard des conducteurs, au moins une piste adaptée de telle sorte que l'impédance entre les conducteurs varie lors de la rotation de la première bague,
caractérisée par le fait que:
- elle comprend une deuxième bague de commande, coaxiale à la première, montée à rotation sur le corps et munie d'une seconde plaquette de circuit, généralement perpendiculaire à son axe de rotation,
- les deux conducteurs électriques reposent par contact frottant sur la seconde plaquette de circuit par leur seconde extrémité, et
- la seconde plaquette de circuit comporte, sur sa face en regard des conducteurs, un nombre de pistes en matériau électriquement conducteur, égal au nombre de conducteurs, ces pistes restant en contact permanent respectivement avec l'un de ces conducteurs, de sorte que la rotation de la seconde bague soit sans effet sur l'état de liaison des conducteurs donc sur la commande issue de la première bague.

D'autres caractéristiques, buts et avantages de la présente invention apparaîtront à la lecture de la description détaillée qui va suivre, et en regard des dessins annexés donnés à titre d'exemple non limitatif et sur lesquels :
- la figure 1 représente une vue schématique en coupe axiale d'une manette de commande conforme à la présente invention, et,
- les figures 2 à 9 représentent différentes vues en coupe transversale de la même manette selon des plans de coupe référencés respectivement II-II, III-III, IV-IV, V-V, VI-VI, VII-VII, VIII-VIII et IX-IX sur la figure 1.

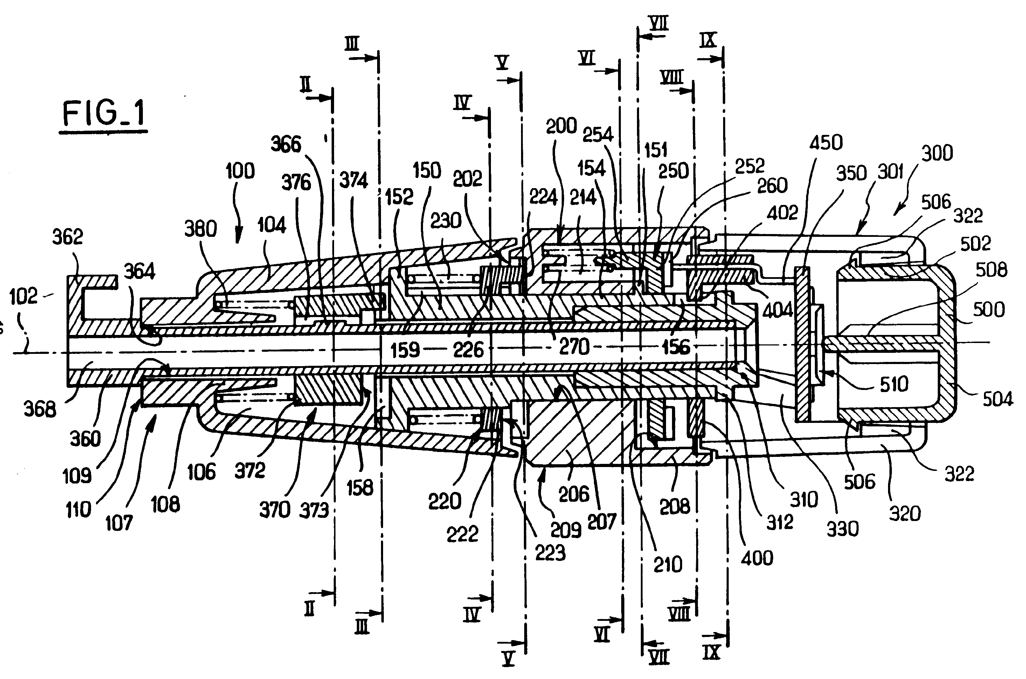

Dans la description qui va suivre, l'extrémité dite "avant" de la manette correspondra à l'extrémité représentée à droite de la figure 1, tandis que l'extrémité dite "arrière" de la manette correspondra à l'extrémité de celle-ci, illustrée sur la gauche de la figure 1.

Comme indiqué précédemment, pour l'essentiel, la manette de commande conforme à la présente invention comprend un corps fixe 100 et deux bagues de commande rotatives référencées 200 et 300.

Le corps 100 comprend un fourreau 104. L'axe du fourreau 104 est référencé 102. La surface externe du fourreau 104 peut faire l'objet de nombreuses variantes. De préférence, la surface externe du fourreau 104 est généralement cylindrique ou tronconique.

Selon le mode de réalisation particulier illustré sur la figure 1, la surface externe du fourreau 104 est généralement tronconique. Il en est de même de la chambre interne 105 du fourreau 104. Toutefois, celui-ci est muni, au niveau de son extrémité arrière 107, d'une douille 108. Cette douille 108 possède un alésage cylindrique central 109 de diamètre constant. La douille 108 remplit une fonction de guidage à rotation, comme cela sera explicité par la suite.

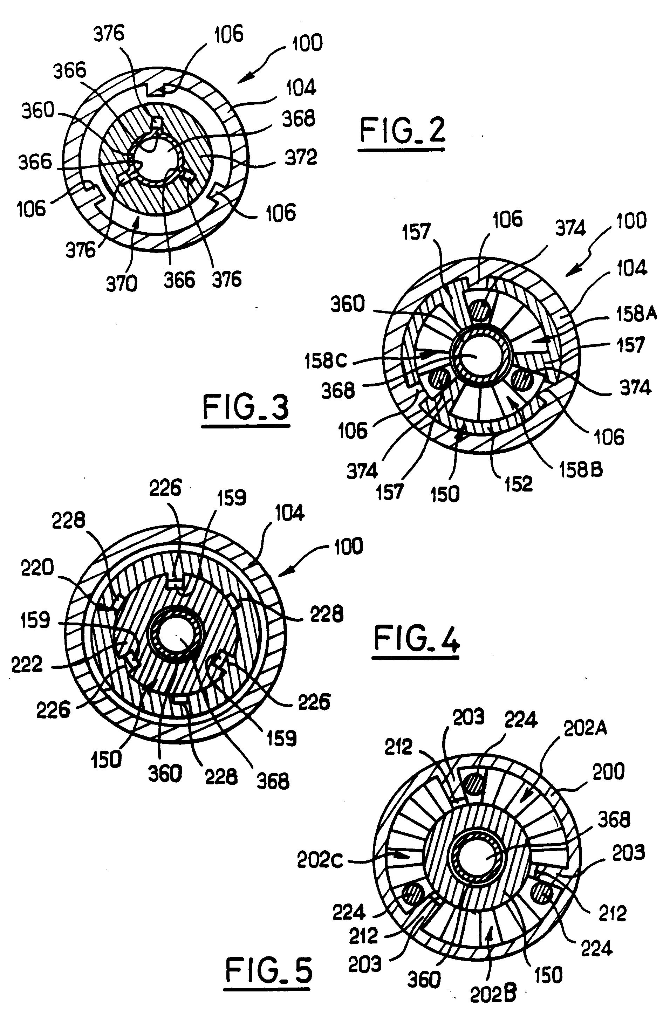

Le corps 100 comprend outre le fourreau 104, un manchon de guidage 150. Pour l'essentiel, le manchon de guidage 150 est formé d'un cylindre centré sur l'axe 102. Le cylindre 150 est muni, au niveau de son extrémité arrière, d'une collerette 152 évasée radialement par rapport à l'axe 102. La périphérie de la collerette 152 est complémentaire de la surface interne du fourreau 104, afin d'assurer une fixation rigide à la rotation et à la translation entre le manchon de guidage 150 et le fourreau 104. Le cas échéant, pour garantir une immobilisation à rotation entre le manchon de guidage 150 et le fourreau 104, ce dernier peut être muni, sur sa surface interne d'une pluralité de nervures longitudinales 106 équiréparties autour de l'axe 102. Selon la représentation des figures 2 et 3, il est ainsi prévu trois nervures 106. Cette disposition particulière n'est cependant pas limitative. De préférence, la collerette 152 est fixée sur la surface interne du fourreau 104 sensiblement à mi-longueur de celui-ci.

Le manchon de guidage 150 émerge largement sur l'avant du fourreau 104. On notera que de préférence le diamètre interne du cylindre 150 composant le manchon de guidage est égal au diamètre interne de l'alésage 109 de la douille 108.

Le cylindre 150 composant le manchon de guidage est par ailleurs prolongé, à son extrémité avant, d'une pièce, par une portion cylindrique 154, centrée sur l'axe 102, et présentant un diamètre interne plus important.

La première bague de commande 200 est guidée à rotation sur le manchon de guidage 150, en avant du fourreau 104.

La bague de commande 200 comprend un bloc cylindrique 206 muni d'un alésage central cylindrique et traversant 207. Le diamètre de l'alésage 207 est complémentaire, avec un léger jeu, du diamètre externe du manchon de guidage 150, pour autoriser une rotation relative entre la bague de commande 200 et le manchon de guidage 150.

Le bloc cylindrique 206 se prolonge vers l'avant par une jupe 208 centrée sur l'axe 102. La surface externe de la jupe 208 prolonge la surface externe 209 du bloc cylindrique 206. Le diamètre de la chambre interne 210 définie par la jupe 208 est nettement supérieur au diamètre de l'alésage interne 207.

La bague 200 est associée à des moyens d'indexation à rotation autour de l'axe 102.

Ces moyens d'indexation comprennent une bague 220. La bague d'indexage 220 est placée sur le manchon de guidage 150, dans le fourreau 104, en arrière de la première bague de commande 200. La bague d'indexage 220 est immobilisée à rotation sur le manchon de guidage 150, mais susceptible de translation axiale par rapport à celui-ci.

Selon l'illustration donnée sur les figures annexées, l'immobilisation à rotation définie entre la bague d'indexage 220 et le manchon de guidage 150 est réalisé par trois dentures 226. Ces dentures 226 sont ménagées sur la surface interne de la bague d'indexage 220. Elles sont par conséquent dirigées vers l'axe 102 et équiréparties autour de celui-ci. Les dentures 226 pénètrent dans des rainures longitudinales complémentaires 159, ménagées sur la périphérie externe du manchon de guidage 150.

L'homme de l'art comprendra qu'il peut être prévu un nombre différent de dentures 226 et rainures complémentaires 159. Le cas échéant, il peut ainsi être prévu une seule denture 226 et une seule rainure 159.

Par ailleurs, selon une autre variante, la disposition précitée assurant l'immobilisation entre la bague d'indexage 220 et le manchon de guidage 150 peut être inversée. C'est-à-dire que les dentures peuvent être prévues en saillie sur la surface externe du manchon de guidage 150, alors que les rainures longitudinales complémentaires seraient prévues sur la surface interne de la bague d'indexage 220.

La bague d'indexage 220 est en fait formée d'un anneau 222 centrée sur l'axe 102 et muni des dentures 226 précitées, qui comporte sur sa face transversale avant 223, une pluralité de plots 224. Ceux-ci sont équirépartis autour de l'axe 102 et s'étendent sensiblement parallèlement à ce dernier. Selon la représentation des figures annexées, il est ainsi prévu trois plots 224 équirépartis autour de l'axe 102. Cette disposition n'est cependant pas limitative.

La bague d'indexage 220 est sollicitée vers l'avant de la manette par un ressort spirale 230. Le ressort 230 est intercalé entre la face transversale avant de la collerette 152 et la face transversale arrière de l'anneau 222. Ainsi, les plots 224 reposent élastiquement contre la face transversale arrière 202 de la première bague de commande 200. Cette face transversale arrière 202 est conformée en surface d'indexage.

Plus précisément, la surface transversale arrière 202 de la bague de commande 200 est divisée en une pluralité de secteurs d'indexage crantés, en nombre égal au nombre de plots 224.

On a ainsi représenté schématiquement sur la figure 5 trois secteurs crantés 202A, 202B et 202C sur la face arrière transversale de la première bague de commande 200. Les différents secteurs crantés 202A, 202B et 202C sont séparés par des murets radiaux 203.

Lors de la rotation de la bague de commande autour de l'axe 102, les plots 224 passent d'un cran à l'autre des secteurs 202A, 202B et 202C respectivement associés.

Le nombre de crans prévus au niveau de chaque secteur 202A, 202B et 202C définit le nombre de positions stables de la première bague de commande 200, lors de sa rotation autour de l'axe 102.

Sur la figure 5, on a illustré schématiquement 8 crans pour chaque secteur 202A, 202B et 202C, correspondant par conséquent à 8 positions stables de la première bague de commande 100. Cette disposition n'est bien entendu pas limitative. Les murets radiaux 203 limitent l'angle de pivotement de la première bague de commande 200 en interdisant à chaque plot 224 de passer d'un secteur 202A, 202B, 202C à l'autre.

Comme indiqué précédemment, le ressort 230 sollicite la bague d'indexage 220 et par conséquent la première bague de commande 200, vers l'avant. Toutefois, le déplacement vers l'avant de la première bague de commande 200 est limité par des dents 151 en saillie sur la surface externe de la portion 154 du manchon de guidage 150. Ainsi, comme illustré sur la figure 1, sous l'effet de la sollicitation du ressort 230, la face transversale avant du bloc cylindrique 206 vient prendre appui sur les dents 151.

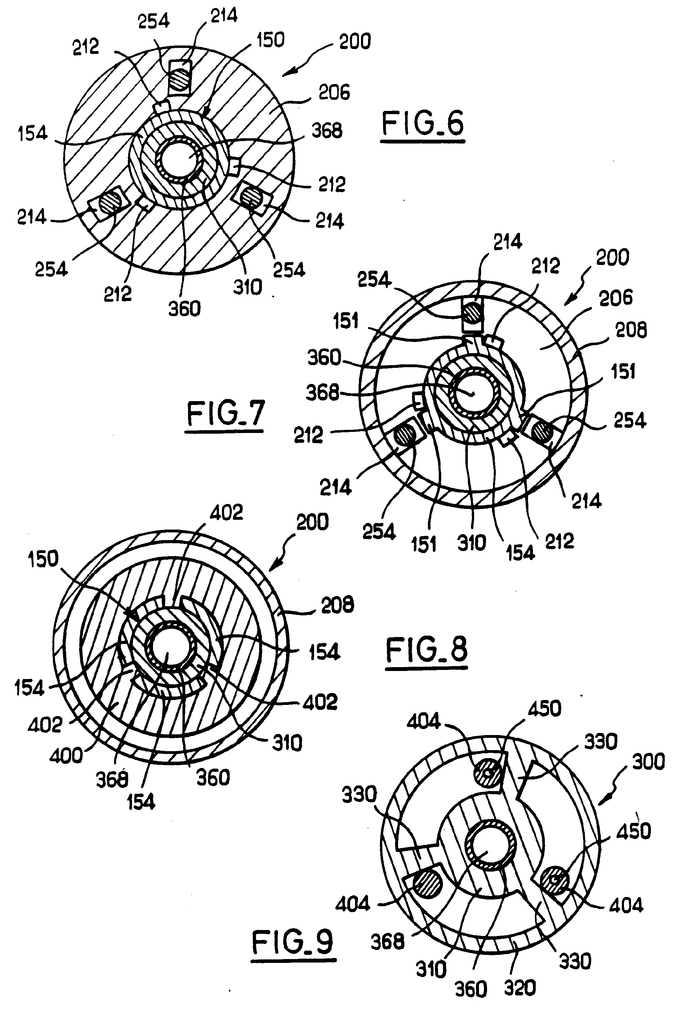

Selon la représentation donnée sur les figures annexées, notamment la figure 7, il est ainsi prévu trois dents 151 équiréparties autour de l'axe 102, sur la surface externe de l'élément 154. Cette disposition n'est bien entendu pas limitative, et un nombre de dents 151 différent peut être retenu.

Pour permettre d'engager la bague de commande 200 sur le manchon de guidage 150 de l'avant vers l'arrière, le bloc cylindrique 206 de la bague de commande 200, doit être muni sur sa surface interne 207 de rainures longitudinales 212 complémentaires des dents 151. Selon l'illustration donnée sur les figures 6 et 7, il est ainsi prévu trois rainures longitudinales 212 équiréparties autour de l'axe 102. Pour positionner la bague de commande 200 sur le manchon de guidage 150, on procède comme suit. La bague de commande 200 est placée coaxialement au manchon de guidage 150 en veillant à aligner les dents 151 sur les rainures longitudinales 212. La bague de commande 200 est déplacée à translation, parallèlement à l'axe 102 sur le manchon de guidage 150. Les dents 151 glissent ainsi dans les rainures 212. Lorsque le bloc cylindrique 206 a franchi les dents 151, la bague de commande 200 est entraînée à rotation autour de l'axe 102, pour désaligner les rainures 212 et les dents 151.

Afin d'éviter que, en fonctionnement, les rainures 212 puissent être alignées sur les dents 151, de préférence, l'orientation angulaire des dents 151 et des rainures 212 est telle que, lorsque les dents 151 sont placées dans les rainures 212, les murets radiaux 203 prévus sur la face transversale arrière 202 soient placés respectivement en regard des plots 224. En effet, en fonctionnement, après rotation de la bague de commande 200, les plots 224 viennent buter contre les flancs des murets radiaux 203 et interdisent par conséquent que les rainures longitudinales 212 puissent à nouveau être alignées sur les dents 151.

De préférence, la bague d'indexage 220 est engagée de l'avant vers l'arrière sur le manchon de guidage 150, avant la première bague de commande 200. Pour cette raison, la bague d'indexage 220 est de préférence munie, sur sa surface interne, d'une pluralité de rainures longitudinales 228 complémentaires des dents 151. Les rainures 228 sont visibles sur la figure 4 annexée.

La première bague de commande 200 est associée à une platine 250. La platine 250 est placée sur l'avant du bloc cylindrique 206, dans l'espace interne défini par la jupe 208. La platine 250 est liée à rotation avec la première bague de commande 200, mais susceptible de translation axiale par rapport à celle-ci.

La platine 250 comprend un anneau 252 guidé à rotation sur l'élément 154, en avant des dents 151. De plus, l'anneau 252 est muni sur sa surface transversale arrière d'une pluralité de plots 254. Ces derniers sont équirépartis autour de l'axe 102 et s'étendent sensiblement parallèlement à celui-ci. Selon l'illustration donnée sur les figures annexées, en particulier, sur les figures 6 et 7, il est ainsi prévu trois plots 254 équirépartis autour de l'axe 102. Cette disposition n'est bien entendu pas limitative.

Les plots 254 pénètrent dans des alésage borgnes 214 ménagés dans le bloc cylindrique 206. Les alésages borgnes 214 sont équirépartis autour de l'axe 102. Ils débouchent sur la face transversale avant du bloc cylindrique 206.

Des ressorts 270 intercalés entre le fond des alésages borgnes 214 et un décrochement ménagé sur les plots 254, sollicitent la platine 250 vers l'avant.

La surface transversale avant de la platine 250 porte une première plaquette de circuit 260 en forme de couronne.

De préférence, la première plaquette de circuit 260 comprend une piste électriquement résistante.

La deuxième bague de commande 300 est placée en avant de la première bague de commande 200. Elle est formée, d'une pièce, d'un manchon interne 310, d'une jupe externe 320 et d'une pluralité d'ailes radiales 330 qui relient le manchon 310 et la jupe 320.

Selon l'illustration donnée sur les figures annexées, il est ainsi prévu trois ailes radiales 330 équiréparties autour de l'axe 102.

De préférence, les surfaces externes 209 et 301 des deux bagues de commande 200, 300, prolongent sensiblement la surface externe du fourreau 104.
La seconde bague de commande 300 porte une seconde plaquette de circuit 350. Celle-ci s'étend perpendiculairement à l'axe 102. La plaque de circuit 350 peut être fixée sur la jupe externe 320 et/ou sur les ailes radiales 330, par tout moyen classique approprié.

La seconde bague de commande 300 est associée à un tube 360. Ce tube doit être rigide à la torsion. Il est engagé dans la douille 108 et le manchon de guidage 150. A cet effet, le tube 360 possède un diamètre externe, sensiblement complémentaire, avec un léger jeu, de la douille 108 et du manchon de guidage 150.

Le tube 360 est emmanché à force, à son extrémité avant, dans le manchon interne 310. Ce dernier est lui-même guidé à rotation dans l'élément 154 solidaire du manchon de guidage 150. A cet effet, le diamètre externe du manchon interne 310 doit être sensiblement complémentaire, avec un léger jeu, du diamètre interne de l'élément 154.

Le tube 360 est muni, au niveau de son extrémité arrière, d'un maneton excentré 362. La fonction de ce maneton sera explicitée par la suite.

L'homme de l'art comprendra aisément que la deuxième bague de commande 300 et le tube 360, solidaires entre eux, sont guidés à rotation autour de l'axe 102 sur le corps 100. Cependant, la deuxième bague de commande 300 et le tube 360, sont immobilisés à translation sur le corps 100. Pour cela, l'extrémité arrière du tube 360 est de préférence étagé, pour définir comme illustré sur la figure 1 un décrochement 364 dirigé vers l'avant, apte à prendre appui sur la surface transversale arrière 110 du corps 100. Par ailleurs, le manchon interne 310 est muni, au voisinage de son extrémité avant, d'une nervure périphérique 312 apte à venir en appui contre la surface transversale avant de l'élément 154. Ainsi, la seconde bague de commande 300 et le tube 360 associés sont immobilisés à translation sur le corps 100, grâce d'une part, au décrochement 364 venant en appui contre la surface transversale arrière 110 du corps 100 et d'autre part, grâce à la nervure annulaire 312 apte à venir en appui contre la surface transversale avant de l'élément 154.

Le tube 360 définit un canal interne traversant 368. Celui-ci reçoit des liaisons filaires (non représentées sur les figures pour simplifier l'illustration), reliées d'un côté à la seconde plaque de circuit 350, et de l'autre à des accessoires électriques.

La manette de commande conforme à la présente invention comprend en outre une bague de liaison 400. Celle-ci est placée sur l'extrémité avant de l'élément 154. La bague de liaison 400 est immobilisée à rotation sur l'élément 154, c'est-à-dire par rapport au corps 100, tout en étant susceptible de translation axiale par rapport à celui-ci. A cet effet, la bague de liaison 400 comprend, sur sa surface interne, une pluralité de dents 402. Les dents 402 dirigées radialement vers l'axe 102 pénètrent dans des rainures longitudinales 156 ménagées à l'extrémité avant de l'élément 154. Selon la représentation donnée sur la figure 8 annexée, il est ainsi prévu trois dents 402 pénétrant dans trois rainures longitudinales 156 équiréparties autour de l'axe 102. Cette disposition n'est cependant pas limitative, et un nombre différent de dents 402 et de rainures 156 associées peut être prévu.

Par ailleurs, le cas échéant, une disposition inverse peut être adoptée. C'est-à-dire que, le cas échéant, des dents peuvent être prévues en saillie sur la surface externe de l'élément 154, tandis que la bague de liaison 400 est munie sur sa surface interne de rainures longitudinales complémentaires.

La bague de liaison 400 porte des conducteurs électriques 450. Ceux-ci s'étendent sensiblement parallèlement à l'axe 102, entre la première plaque de circuit 260 et la seconde plaque de circuit 350. Les extrémités respectives des conducteurs électriques 450 reposent contre les plaques de circuit 260, 350 précitées.

La bague de liaison 400 étant immobilisée à rotation par rapport au corps 100, lors de la rotation de la première bague de commande 200 ou de la deuxième bague de commande 300, on obtient un déplacement relatif entre les extrémités des conducteurs électriques 400 et la première plaque de circuit 260 ou la deuxième plaque de circuit 350. L'effort exercé par les extrémités des conducteurs électriques 450 sur la première plaque de circuit 260 et sur la deuxième plaque de circuit 350 est défini par les ressorts 270 qui sollicitent la platine 250 vers l'avant.

Le cas échéant, la bague de liaison 400 peut être munie de plots 404 renforçant le support des conducteurs électriques 450. Les plots 404 sont équirépartis autour de l'axe 102, sur la surface transversale avant de la bague de liaison 400. Les plots 404 s'étendent sensiblement parallèlement à l'axe 102, dans l'espace défini entre les ailettes 330.

Dans l'hypothèse où la première plaque de circuit 260 est munie sur sa surface avant d'au moins une piste annulaire en matériau électriquement résistant, il est prévu de préférence deux conducteurs électriques 450. L'un des conducteurs électriques 450 est déplacé sur la piste résistive lors de la rotation de la première bague de commande 200. L'autre conducteur électrique est déplacé de préférence sur une piste annulaire en matériau électriquement conducteur raccordée à une extrémité de la piste résistive (la piste annulaire en matériau électriquement conducteur étant prévue également sur la face avant de la plaque 260). L'homme de l'art comprendra ainsi aisément que, lors de la rotation de la première bague de commande 200, l'impédance entre les deux conducteurs électriques 450 varie régulièrement et représente directement l'amplitude du pivotement de la bague 200. Les deux conducteurs électriques 450 reposent, par leur extrémité avant, sur des pistes en matériau électriquement conducteur ménagées sur la face arrière de la seconde plaque de circuit 350. Ces pistes électriquement conductrices sont elles-mêmes reliées à des conducteurs engagés dans le canal 368 du tube 360 comme indiqué précédemment. Ainsi, la première plaque de circuit 260 forme une résistance variable dont l'impédance de sortie est directement proportionnelle à la position angulaire de la première bague de commande 200. Cette disposition peut être utilisée par exemple pour commander la vitesse de déplacement d'organes essuie-vitres.

La seconde bague de commande 300 est associée à des moyens d'indexation à rotation. Ces moyens d'indexation comprennent une bague d'indexage 370. La bague d'indexage 370 comprend un anneau 372 engagé sur le tube 360, à l'intérieur du fourreau 104, en arrière de la collerette 152.

L'anneau 372 est immobilisé à rotation par rapport au tube 360 mais libre de translation sur celui-ci.

Pour cela, selon la disposition illustrée sur les figures, il est prévu trois dentures 366, équiréparties autour de l'axe 102, en saillie sur la surface externe du tube 360. Les dents 366 pénètrent dans des rainures longitudinales respectives 376 ménagées sur la surface interne de l'anneau 372.

Bien entendu un nombre de dents 366 et de rainures longitudinales différent peut être retenu.

Par ailleurs, une disposition inverse peut être retenue, à savoir que les dents peuvent être ménagées sur la surface interne de la bague d'indexage 372, alors que les rainures longitudinales complémentaires seraient aménagées sur la surface externe du tube 360.

L'anneau 372 est muni sur sa surface transversale avant 373 d'une pluralité de plots 374 équirépartis autour de l'axe 102. Selon l'illustration non limitative donnée sur les figures annexées, il est ainsi prévu trois plots 374. La bague d'indexage 370 est sollicitée vers l'avant par un ressort 380. Le ressort 380 est intercalé entre la base du fourreau 104 et la surface transversale arrière de l'anneau 372, sur la douille 108. Ainsi, les plots 374 reposent contre la surface transversale arrière 158 de la collerette 152. Cette surface transversale arrière 158 est divisée en un nombre de secteurs crantés égal au nombre de plots 374. Selon la représentation donnée sur la figure 3 annexée, il est ainsi prévu trois secteurs crantés 158A, 158B et 158C. Les secteurs 158A, 158B et 158C sont séparés par des murets radiaux 157 en saillie sur la surface transversale arrière 158. Lors de la rotation de la seconde bague de commande 300 et donc du tube 360, autour de l'axe 102, les plots 374 passent d'un cran à l'autre ménagés sur les secteurs 158A, 158B et 158C respectivement. Les murets radiaux 157 évitent que les plots 374 passent d'un secteur 158A, 158B ou 158C à l'autre. Le nombre de crans prévu au niveau de chaque secteur 158A, 158B, 158C définit le nombre de positions stables de la seconde bague de commande 300. Selon la représentation schématique donnée sur la figure 3, il est ainsi prévu 4 crans pour chaque secteur 158A, 158B et 158C.

Selon une autre caractéristique avantageuse de l'invention, la seconde bague de commande 300 est de plus équipée d'un bouton poussoir 500. Celui-ci est susceptible de translation parallèlement à l'axe 102 pour commander un élément interrupteur 510 porté par la face transversale avant de la seconde plaque de circuit 350. L'élément interrupteur 510 est avantageusement un élément cloquant assurant le rappel en position de repos du bouton poussoir 500. Le bouton poussoir 500 peut faire l'objet de nombreux modes de réalisation. Selon la représentation donnée sur la figure 1, il comprend une jupe cylindrique 502 obturée à son extrémité avant par une paroi transversale 504. La jupe cylindrique est munie sur sa surface externe et à son extrémité arrière de dentures 506 venant reposer contre des ailettes 322 solidaires de la surface interne de la jupe 320 pour interdire le retrait du bouton poussoir 500. La paroi 504 porte sur sa surface interne et vers l'arrière une tige centrale 508 centrée sur l'axe 102 et dirigée vers l'élément interrupteur 510. Ainsi, lorsque le bouton poussoir 500 est sollicité vers l'arrière, par translation selon l'axe 102, la tige centrale 508 peut venir actionner l'élément interrupteur 510 pour modifier l'état de celui-ci. Si l'élément interrupteur 510 est un élément cloquant, celui-ci assure le rappel en position de repos du bouton poussoir 500 ; sinon un ressort de rappel doit être associé au bouton 500.

De préférence, l'extrémité avant du fourreau 104, les extrémités avant et arrière de la première bague de commande 200 et l'extrémité arrière de la deuxième bague de commande 300 sont conformées pour définir en combinaison des structures en chicane illustrées schématiquement sur la figure 1, aptes à limiter la pénétration de poussière ou autres corps étrangers à l'intérieur de la manette.

Pour assembler la manette de commande précédemment décrite, on procède comme suit.

Le tube 360 est engagé par l'arrière dans la douille 108. Le décrochement 364 vient alors en appui contre la surface transervale arrière 110 du corps 100.

Le ressort 380 et la bague d'indexage 370 sont engagés par l'avant sur le tube 360 à l'intérieur du fourreau 104. Puis, le manchon de guidage 150 est engagé sur le tube 360 et fixé sur la surface interne du fourreau 104. Le ressort 230 et la bague d'indexage 220 sont engagés par l'avant sur le manchon de guidage 150. On rappelle que pour cela, il y a lieu d'aligner initialement les rainures longitudinales 228 ménagées dans la bague d'indexage 220 avec les dents 151 solidaires du manchon de guidage 150. Lorsque la bague d'indexage 220 a franchi les dents 151, la bague 220 peut être pivotée autour de l'axe 102.

La première bague de commande 200 est alors engagée par l'avant sur le manchon de guidage 150. Là encore, il y a lieu pour cela d'aligner initialement les rainures 212 sur les dents 151. A la fin de cet engagement les murets radiaux 203 viennent en appui contre les plots 224. Le ressort 230 est comprimé. Puis, la première bague de commande 200 est pivotée autour de l'axe 102. Les plots 224 viennent alors reposer contre l'un des secteurs crantés 202. La coopération entre les murets radiaux 203 et les plots 224 interdit tout alignement ultérieur des rainures longitudinales 212 sur les dents 151. Grâce à la sollicitation du ressort 230, la surface transversale avant du bloc cylindrique 206 vient reposer contre les dents 151. Les ressorts 270 sont engagés dans les alésages borgnes 214, puis la platine 250 est engagée par l'avant sur le manchon de guidage 150 en veillant à aligner les plots 254 sur les alésages borgnes 214.

La bague de liaison 400 est engagée à son tour par l'avant sur le manchon de guidage 150, en veillant à aligner les dents 402 sur les rainures longitudinales 156. Puis, une seconde bague de commande 300 équipée de la seconde plaque de circuit 350 et d'un bouton 500 est engagée par l'avant dans le manchon de guidage 150. Au cours de cette opération, l'extrémité avant du tube 360 est emmanchée à force à l'intérieur du manchon interne 310. Comme indiqué précédemment, on assure ainsi simultanément une liaison rigide entre le tube 360 et la deuxième bague de commande 300, et une immobilisation à translation entre l'ensemble 360, 300 ainsi formé et le corps fixe 100.

La manette de commande est alors prête à l'utilisation.

Un utilisateur peut entraîner la première bague de commande 200 à rotation autour de l'axe 102. Cette rotation est indexée par la bague d'indexage 220. Les conducteurs électriques 450 étant immobilisés à rotation par rapport au corps 100, lors de la rotation de la première bague de commande 200, les pistes prévues sur la première plaque de circuit 260 sont déplacées par rapport aux extrémités arrières des conducteurs électriques 450. Comme indiqué précédemment, cette disposition peut être utilisée pour définir une variation d'impédance entre les conducteurs électriques 450, afin par exemple de contrôler une vitesse de déplacement d'organes essuie-vitres. Le cas échéant, le déplacement relatif plaque de circuit 260/conducteur électrique 450 peut être utilisé pour générer un effet de commutation et non point une variation d'impédance.

De même, un utilisateur peut entraîner la deuxième bague de commande 300 à rotation autour de l'axe 102. Cette rotation est indexée par la bague 370. La rotation de la bague de commande 300 autour de l'axe 102 entraîne un déplacement du maneton 362 apte à commander le déplacement d'un tiroir ou chariot de commutation intégré par exemple de façon classique en soi à un commutateur électrique. On notera que dans la mesure où les extrémités avant des conducteurs électriques 450 reposent contre des pistes électriquement conductrices en forme de couronne centrée sur l'axe 102 ménagé sur la seconde plaque de circuit 350, la rotation de la seconde bague de commande 300 est sans influence sur la commande issue de la première bague 200.

La rotation de la seconde bague de commande 300 peut être utilisée par exemple pour commander la mise en service d'organes essuie-vitres, selon des cadences ou vitesses choisies ou encore la mise en service d'organes lave-vitres.

La commande à translation du bouton poussoir 500 peut en outre permettre de commander des fonctions électriques accessoires.

Bien entendu la présente invention n'est pas limitée au mode de réalisation particulier qui vient d'être décrit.

On notera par exemple que le cas échéant, la bague d'indexage 220 pourrait être immobilisée à rotation par rapport à la première bague de commande 200, tout en restant libre de translation par rapport à celle-ci, et sollicitée élastiquement contre une rampe d'indexage crantée ménagée sur le corps 100.

De même, la bague d'indexage 370 pourrait être immobilisée à rotation par rapport au corps 100, tout en restant libre de translation par rapport à celui-ci, et sollicitée élastiquement contre une rampe d'indexage crantée solidaire du tube 360.

## Revendications

1. Manette de commande, en particulier pour véhicule automobile, du type comprenant:
- un corps fixe (100),
- une première bague de commande (200), montée à rotation sur le corps (100) et munie d'une première plaquette de circuit (260), généralement perpendiculaire à son axe de rotation (102), et
- au moins deux conducteurs électriques (450), généralement parallèles à l'axe de rotation (102) de la première bague, et immobilisés à rotation par rapport au corps (100), qui reposent par contact frottant sur la première plaquette de circuit (260) par une de leurs extrémités respectives,
- la première plaquette (260) comportant, sur sa face en regard des conducteurs au moins une piste adaptée de telle sorte que l'impédance entre les conducteurs varie lors de la rotation de la première bague,
caractérisée par le fait que:
- elle comprend une deuxième bague de commande (300), coaxiale à la première, montée à rotation sur le corps (100) et munie d'une seconde plaquette de circuit (350), généralement perpendiculaire à son axe de rotation,
- les deux conducteurs électriques (450) reposent par contact frottant sur la seconde plaquette de circuit (350) par leur seconde extrémité, et
- la seconde plaquette de circuit (350) comporte, sur sa face en regard des conducteurs (450), un nombre de pistes en matériau électriquement conducteur,égal au nombre de conducteurs, ces pistes restant en contact permanent respectivement avec l'un de ces conducteurs, de sorte que la rotation de la seconde bague soit sans effet sur l'état de liaison des conducteurs et donc sur la commande issue de la première bague (200).

2. Manette de commande selon la revendication 1, caractérisée par le fait qu'elle comprend une bague de liaison (400) immobilisée à rotation par rapport au corps (100), mais libre de translation sur celui-ci, qui porte chaque conducteur électrique (450).

3. Manette de commande selon l'une des revendications 1 à 2, caractérisée par le fait que la première et la seconde bagues (200,300) sont adjacentes axialement.

4. Manette de commande selon l'une des revendications 1 à 3, caractérisée par le fait que la première bague (200) est guidée à rotation sur un manchon de guidage (150) solidaire du corps (100), alors que la seconde bague (300) est guidée à rotation, grâce à l'une de ses parties formant manchon interne (310), engagée dans le manchon de guidage (150).

5. Manette de commande selon l'une des revendications 1 à 4, caractérisée par le fait que la première plaquette de circuit (260) est portée par une platine (250) immobilisée à rotation par rapport à la première bague (200), mais susceptible de translation axiale par rapport à celle-ci.

6. Manette de commande selon la revendication 5, caractérisée par le fait que la platine (250) est sollicitée élastiquement vers la seconde plaquette de circuit (350).

7. Manette de commande selon l'une des revendications 1 à 6, caractérisée par le fait que la seconde bague (300) comprend un manchon interne (310), une jupe externe (320) et plusieurs ailes radiales (330) qui retient le manchon interne (310) et la jupe externe (320).

8. Manette de commande selon la revendication 7, caractérisée par le fait que chaque conducteur électrique (450) s'étend dans l'espace défini entre deux ailes radiales adjacentes (330).

9. Manette de commande selon l'une des revendications 7 ou 8, caractérisée par le fait que le manchon interne (310) est fixé sur un tube central (360).

10. Manette de commande selon la revendication 9, caractérisée par le fait que le tube central (360) est muni d'une partie excentrée (362) apte à générer un effet de commutation lors de la rotation de la seconde bague de commande (300).

11. Manette de commande selon l'une des revendications 9 ou 10, caractérisée par le fait que des fils conducteurs reliés à la seconde plaquette de circuit (350) traversent le tube central (360).

12. Manette de commande selon l'une des revendications 1 à 11, caractérisée par le fait que la seconde bague (300) porte un bouton poussoir (500).

13. Manette de commande selon la revendication 12, caractérisée par le fait que le bouton poussoir (500) coopère avec un élément interrupteur (510) porté par la seconde plaquette de circuit (350).

14. Manette de commande selon la revendication 13, caractérisée par le fait que l'élément interrupteur (510) porté par la seconde plaquette de circuit (350) est formé d'un élément cloquant.

15. Manette de commande selon l'une des revendications 1 à 14, caractérisée par le fait que l'une au moins des bagues (200, 300) est associée à des moyens d'indexation en rotation (220, 230 ; 370, 380).

16. Manette de commande selon la revendication 15, caractérisée par le fait que les moyens d'indexation comprennent un anneau (220, 370) lié à rotation mais libre de translation axiale par rapport au corps (100) ou à la bague (200 ; 300) et sollicité élastiquement contre une rampe d'indexage (202 ; 158) prévue sur la bague (200 ; 300) ou le corps (100).

17. Manette de commande selon l'une des revendications 15 ou 16, caractérisé par le fait que les moyens d'indexation associés à la première bague de commande (200) comprennent un anneau (220) lié à rotation, mais libre de translation axiale par rapport au corps (100) et sollicité élastiquement contre une rampe d'indexage (202) prévue sur la bague de commande (200).

18. Manette de commande selon l'une des revendications 15 à 17, caractérisée par le fait que les moyens d'indexation associés à la seconde bague de commande (300) comprennent un anneau (370), lié à rotation mais libre de translation axiale par rapport à la seconde bague de commande (300), et sollicité élastiquement contre une rampe d'indexage (158) prévue sur le corps (100).

## Patentansprüche

1. Schalthebelgriff, vor allem für Kraftfahrzeuge, des Typs, der enthält:
- einen festen Hauptteil (100),
- einen ersten Schaltring (200), drehbar auf dem Hauptteil (100) angebracht und mit einer ersten Schaltungsplatte (260) versehen, allgemein senkrecht zu der Rotationsachse (102), und
- wenigstens zwei elektrische Leiter (450), im allgemeinen parallel zu der Rotationsachse (102) des ersten Rings und drehfest bezogen auf den Hauptteil 100, die mittels Schleifkontakt auf der ersten Schaltungsplatte (260) aufliegen, jeweils mit einem ihrer Enden,
- die erste Platte (260) mit, auf ihrer den Leitern zugekehrten Seite, wenigstens einer Leiterbahn, die so ausgelegt ist, daß die Impedanz zwischen den Leitern sich ändert bei der Drehung des ersten Rings,
dadurch **gekennzeichnet** , daß:
- er einen zweiten Schaltring (300) enthält, koaxial zum ersten, drehbar auf dem Hauptteil (100) angebracht und mit einer zweiten Schaltungsplatte (350) versehen, allgemein senkrecht zu seiner Rotationsachse,
- die beiden elektrischen Leiter (450) mit ihrem zweiten Ende mittels Schleifkontakt auf der zweiten Schaltungsplatte (350) aufliegen, und
- die zweite Schaltungsplatte (350) auf ihrer den Leitern (450) zugekehrten Seite eine Anzahl Leiterbahnen aus elektrisch leitendem Material enthält, die gleich groß ist, wie die Anzahl der Leiter, wobei diese Leiterbahnen mit jeweils einem der Leiter in permanentem Kontakt bleiben, so daß die Drehung des zweiten Rings ohne Wirkung bleibt auf den Verbindungszustand der Leiter und folglich auf die von dem ersten Ring (200) abgeleitete Schaltung.

2. Schalthebelgriff nach Anspruch 1, dadurch gekennzeichnet, daß er einen Verbindungsring (400) enthält, drehfest mit Bezug auf den Hauptteil (100), aber auf diesem verschiebbar, der jeden elektrischen Leiter (450) trägt.

3. Schalthebelgriff nach einem der Ansprüche 1 und 2, dadurch gekennzeichnet, daß der erste und der zweite Ring (200, 300) axial benachbart sind.

4. Schalthebelgriff nach einem der Ansprüche 1 bis 3, dadurch gekennzeichnet, daß der erste Ring (200) rotationsgeführt wird auf einer Führungsmuffe (150), fest mit dem Hauptteil (100) verbunden, während der zweite Ring (300) rotationsgeführt wird durch eines seiner Teile, das eine innere Muffe (310) bildet, die in die Führungsmuffe (150) hineingesteckt ist.

5. Schalthebelgriff nach einem der Ansprüche 1 bis 4, dadurch gekennzeichnet, daß die erste Schaltungsplatte (260) getragen wird von einer Halteplatte (250), drehfest mit Bezug auf den ersten Ring (200) aber axial verschiebbar, bezogen auf diesen.

6. Schalthebelgriff nach Anspruch 5, dadurch gekennzeichnet, daß die Halteplatte (250) elastisch gegen die zweite Schaltungsplatte (350) gedrückt wird.

7. Schalthebelgriff nach einem der Ansprüche 1 bis 6, dadurch gekennzeichnet, daß der zweite Ring (300) eine innere Muffe (310), eine äußere Verkleidung (320) und mehrere Radialrippen (330) umfaßt, wobei die letzteren die innere Muffe (310) und die äußere Verkleidung (320) verbinden.

8. Schalthebelgriff nach Anspruch 7, dadurch gekennzeichnet, daß jeder elektrische Leiter (450) sich in den abgegrenzten Raum zwischen zwei benachbarten Radialrippen (330) erstreckt.

9. Schalthebelgriff nach einem der Ansprüche 7 oder 8, dadurch gekennzeichnet, daß die innere Muffe (310) auf einem zentralen Rohr (360) befestigt ist.

10. Schalthebelgriff nach Anspruch 9, dadurch gekennzeichnet, daß das zentrale Rohr (360) einen exzentrischen Teil (362) aufweist, der einen Kommutationseffekt erzeugen kann bei der Drehung des zweiten Schaltrings (300).

11. Schalthebelgriff nach einem der Ansprüche 9 oder 11, dadurch gekennzeichnet, daß die an der zweiten Schaltungsplatte (350) angeschlossenen leitenden Drähte das zentrale Rohr (360) durchlaufen.

12. Schalthebelgriff nach einem der Ansprüche 1 bis 11, dadurch gekennzeichnet, daß der zweite Ring (300) einen Druckknopf (500) trägt.

13. Schalthebelgriff nach Anspruch 12, dadurch gekennzeichnet, daß der Druckknopf (500) zusammenwirkt mit einem Schaltelement (510), das von der zweiten Schaltungsplatte (350) getragen wird.

14. Schalthebelgriff nach Anspruch 13, dadurch gekennzeichnet, daß das Schaltelement (510), das auf der zweiten Schaltungsplatte (350) angebracht ist, von einem blasenbildendes Element gebildet wird.

15. Schalthebelgriff nach einem der Ansprüche 1 bis 14, dadurch gekennzeichnet, daß wenigsten einer der Ringe (200, 300) verbunden ist mit den Drehungsindexierungsmitteln (220, 230; 370, 380).

16. Schalthebelgriff nach Anspruch 15, dadurch gekennzeichnet, daß die Indexierungsmittel einen Ring (220, 370) enthalten, drehungsgebunden aber axial frei verschiebbar bezogen auf den Hauptteil (100) oder auf den Ring (200; 300) und elastisch gegen eine Indexierungsrampe (202; 158) gedrückt, die auf dem Ring (200; 300) oder dem Hauptteil (100) vorgesehen ist.

17. Schalthebelgriff nach einem der Ansprüche 15 oder 16, dadurch gekennzeichnet, daß die mit dem ersten Schaltring (200) verbundenen Indexierungsmittel einen Ring (220) enthalten, drehungsgebunden aber axial frei verschiebbar bezogen auf den Hauptteil (100) und elastisch gegen eine Indexierungsrampe (202) gedrückt, die auf dem Schaltring (200) vorgesehen ist.

18. Schalthebelgriff nach einem der Ansprüche 15 bis 17, dadurch gekennzeichnet, daß die mit dem zweiten Schaltring (300) verbundenen Inexierungsmittel einen Ring (370) enthalten, drehungsgebunden aber axial frei verschiebbar bezogen auf den zweiten Schaltring (300) und elastisch gegen eine Indexierungsrampe (158) gedrückt, die auf dem Hauptteil (100) vorgesehen ist.

## Claims

1. A control lever, in particular for a motor vehicle, the lever being characterized in that it comprises:
a fixed body (100),
a first control ring (200), mounted to rotate on the body (100) and provided with a first circuit board (260) extending generally perpendicularly to its axis of rotation (102);
- at least two electrical conductors (450), generally parallel to the axis of rotation (102) of the ring , and prevented from rotation from the body (100), which rest in rubbing contact on the first circuit board (260) at one of their ends,
- said first circuit board (260) comprising, on its face in regard of the conductors, at least a track adapted so that the impedance between the conductors changes upon rotation of the ring,
characterized in that :
- it comprises a second control ring (300), coaxial with the first control ring,mounted to rotate relative to the body (100), and provided with a second circuit board (350), extending generally perpendicularly to its axis of rotation ;
- the two electrical conductors (450) rest in rubbing contact on the second circuit board (350) at their second end,
- the second circuit board (350) comprises, on its face in regard of the conductors (450) a number of tracks in electrical conductive material, equal to the number of conductors, these tracks being in permanent contact respectively with one of these conductors, so that the rotation of the second control ring has no effect on the connection of the conductors, and consequently on the control corresponding to the first ring (200).

2. A control lever according to claim 1, characterized by the fact that it includes a link ring (400) prevented from rotating relative to the body (100) but free to move in translation thereon, said link ring carrying each electrical conductor (450).

3. A control lever according to any one of claims 1 to 2, characterized by the fact that the first and second rings (200, 300) are axially adjacent.

4. A control lever according to any one of claims 1 to 3, characterized by the fact that the first ring (200) is guided in rotation on a guide tube (150) fixed to the body (100) whereas the second ring (300) is guided in rotation by means of one of its portions forming an inner tube (310) engaged in the guide tube (150).

5. A control lever according to any one of claims 1 to 4, characterized by the fact that the first circuit board (260) is carried by a plate (250) prevented from rotating relative to the first ring (200) but capable of moving in axial translation relative thereto.

6. A control lever according to claim 5, characterized by the fact that the plate (250) is resiliently urged towards the second circuit board (350).

7. A control according to any one of claims 1 to 6, characterised by the fact that the second ring (300) comprises an inner tube (310), an outer skirt (320) , and a plurality of radial fins (330) which interconnect the inner tube (310) and the outer skirt (320).

8. A control lever according to claim 7, characterized by the fact that each electrical conductor (450) extends in the space defined between pairs of adjacent radial fins (330).

9. A control lever according to claim 7 or 8, characterized by the fact that the inner tube (310) is fixed on a central pipe (360).

10. A control lever according to claim 8, characterized by the fact that the central pipe (360) is provided with an excentric portion (362) suitable for generating a switching effect when the second control ring (300) is rotated.

11. A control lever according to claim 9 or 10, characterized by the fact that conductor wires connected to the second circuit board (350) run along the central pipe (360).

12. A control lever according to any one of claims 1 to 11, characterized by the fact that the second ring (300) carries a pushbutton (500).

13. A control lever according to claim 12, characterized by the fact that the pushbutton (500) co-operates with a switch element (510) carried by the second circuit board (350).

14. A control lever according to claim 13, characterized by the fact that the switch element (510) carried by the second circuit board (350) is constituted by a resilient toggle element.

15. A control lever according to any one of claims 1 to 14, characterized by the fact that at least one of the rings (200, 300) is associated with rotary indexing means (220, 230; 370, 380).

16. A control lever according to claim 15, characterized by the fact that the indexing means comprise an annulus (220, 370) connected to rotate with but free to move in axial translation relative to the body (100) or the ring (200; 300), and urged resiliently against an indexing ramp (202; 158) provided on the ring (200; 300) or the body (100).

17. A control lever according to claim 15 or 16, characterized by the fact that the indexing means associated with the first control ring (200) comprise an annulus (220) constrained in rotation but free to move in axial translation relative to the body (100) and resiliently urged against an indexing ramp (202) provided on the control ring (200).

18. A control lever according to any one of claims 15 to 17, characterized by the fact that the indexing means associated with the second control ring (300) comprise an annulus (370) constrained in rotation but free to move in axial translation relative to the second control ring (300), and urged resiliently against an indexing ramp (158) provided on the body (100).
